# FASCICULE DE BREVET EUROPEEN

(11) **EP 1 308 707 B1**
(45) Date de publication et mention de la délivrance du brevet: **28.11.2007**
(21) Numéro de dépôt: 02352022.4
(22) Date de dépôt: 04.11.2002
(51) Int. Cl.: G01M 11/04, F16M 11/08, F16M 11/18

(54) **Dispositif de plateau tournant destiné à supporter et orienter une charge**
Vorrichtung mit drehbarer Plattform zum Tragen und zur Ausrichtung einer Last
Device with a turning platform for supporting and orienting a charge

(30) Priorité: 05.11.2001 FR 0114266
(43) Date de publication de la demande: 07.05.2003
(73) Titulaire: CENTRE NATIONAL D'ETUDES SPATIALES (C.N.E.S.) Etablissement public, scientifique et, F-75039 Paris Cédex 01 (FR)
(72) Inventeur: Gosset, Lucien, 31560 Saint-Leon (FR)
(74) Mandataire: Cabinet BARRE LAFORGUE & associés

(56) Documents cités:
- US-A- 6 023 247
- US-B1- 6 219 082
- PATENT ABSTRACTS OF JAPAN vol. 1998, no. 10, 31 août 1998 (1998-08-31) & JP 10 123428 A (HITACHI DENSHI LTD), 15 mai 1998 (1998-05-15)
- D.M. BERNER ET AL.: "BIAXIAL ROTARY TABLE TEST FIXTURE" IBM TECHNICAL DISCLOSURE BULLETIN., vol. 26, no. 1, juin 1983 (1983-06), pages 130-132, XP002205930 IBM CORP. NEW YORK., US ISSN: 0018-8689
- J. CLARK ET AL.: "AN ACCURATE ROTARY TABLE OF SIMPLE CONSTRUCTION, SUITABLE FOR OPTICAL CALIBRATION PURPOSES" JOURNAL OF SCIENTIFIC INSTRUMENTS., vol. 44, no. 5, mai 1967 (1967-05), pages 400-401, XP002205931 INSTITUTE OF PHYSICS. LONDON., GB

## Description

L'invention vise un dispositif de plateau tournant destiné à supporter et orienter une charge, et notamment un instrument de mesure optique en vue de son étalonnage.

Tout instrument de mesure doit préalablement subir un étalonnage avant sa mise en fonction afin de garantir la validité des résultats transmis. En vue de cet étalonnage, et de façon classique, l'instrument de mesure est présenté avec des orientations différentes par rapport à des sources connues et mesurées de façon traditionnelle. L'analyse des données restituées par l'instrument en comparaison des caractéristiques des sources permet ensuite de bien caractériser cet instrument.

A titre d'exemple, l'étalonnage d'un spectromètre, instrument de mesure des rayonnements gamma dans l'univers, nécessite la présence de trois types de sources :
- les sources générées par un accélérateur de particules, produites en bombardant une cible en carbone ou en aluminium avec un faisceau de protons,
- les sources de faible intensité issues d'isotopes radioactifs,
- les sources de forte intensité constituées d'isotopes produits dans les cuves de réacteurs nucléaires.

Lors de l'étalonnage, le spectromètre est présenté avec des orientations différentes par rapport à ces trois sources. Les paramètres qui rentrent en jeu au cours des mesures sont les suivants :
- bande d'énergie (nature de la source),
- intensité au niveau du plan de détection qui dépend de la source et de la distance entre cette dernière et le plan de détection,
- orientation de l'axe optique du spectromètre par rapport à la source.

Concernant ce dernier point, il convient de distinguer deux cas selon que la source est dans le champ de vision de l'instrument (pyramide à base hexagonale) ou hors de ce champ de vision.

Dans le premier cas, on réalise l'étalonnage proprement dit, tandis que dans le second cas, on étudie les fuites éventuelles de blindage dont il faut tenir compte en fonctionnement réel lors du traitement des informations fournies par la télémesure.

Cet étalonnage nécessite donc de concevoir un dispositif permettant d'orienter l'instrument par rapport aux sources, et la solution la plus réaliste consiste à faire tourner l'axe optique de ce dernier (droite passant par le centre du masque codé et le centre de l'hexagone) autour d'un axe vertical.

De tels dispositifs sont notamment décrits dans le brevet JP-10 123 428 ou l'article de J. CLARK et al. "An accurate rotary table of simple construction, suitable for optical calibration purposes". paru dans le volume 44 du 5 mai 1967 de l"'Institute of Physics London GB".

Toutefois, aucun de ces dispositifs ne s'avère susceptible de supporter des charges importantes pouvant atteindre deux tonnes, et de générer une rotation de cette charge autour d'un axe vertical, tout en permettant de définir avec précision l'orientation de ladite charge par rapport au repère du dispositif.

La présente invention vise à pallier cette lacune et se propose de fournir un dispositif de plateau tournant autour d'un axe vertical apte à supporter des charges importantes, et dont la position angulaire peut être définie de façon très précise.

A cet effet, l'invention vise un dispositif de plateau tournant comprenant :
- un plateau intermédiaire plein en un matériau rigide d'une densité supérieure à 2 kg/dm³, fixe en rotation par rapport au sol et reposant sur le sol par l'intermédiaire d'au moins trois actionneurs verticaux micrométriques répartis sous ledit plateau,
- un réducteur sans jeu angulaire à vis sans fin et roue dentée surmontée d'une platine tournante, disposé sur le plateau intermédiaire,
- des moyens, d'entraînement en rotation de la roue dentée du réducteur,
- et un plateau supérieur rotatif plein en un matériau rigide d'une densité supérieure à 2kg/dm³ porté par la platine tournante du moto-réducteur.

Ce dispositif comporte donc, en premier lieu, un plateau intermédiaire plein fixe en rotation, en un matériau rigide tel qu'avantageusement du granit noir de qualité métrologique, formant le bâti de ce dispositif et sur lequel est monté le réducteur, lui-même supportant le plateau supérieur plein tournant, également en un matériau rigide tel qu'avantageusement du granit noir de qualité métrologique, qui sert d'interfaçage avec la charge et ce réducteur.

La base constructive de ce dispositif de plateau tournant consiste donc en deux plateaux "massiques" :
- un plateau intermédiaire formant le support fixe de l'ensemble rotatif et dont la rigidité permet l'obtention de références horizontale et verticale parfaitement définies pour ledit ensemble rotatif,
- et un plateau supérieur formant le support de la charge, et dont la rigidité permet d'obtenir une rotation en charge et une rotation à vide strictement similaires, et ce, même pour des charges importantes.

De plus, le plateau intermédiaire est supporté par des actionneurs micrométriques qui permettent de régler la verticalité de l'axe de rotation avec une grande précision. Enfin, le réducteur, sans jeu angulaire, permet de positionner le plateau tournant avec une très grande précision, estimée à ± 1" d'arc, qui permet d'orienter des spécimens avec la même précision pour des contrôles ou des mesures.

De plus, le granit noir de qualité métrologique permet de réaliser des plateaux de masse importante présentant une bonne planéité de surface et une excellente stabilité dans le temps et lors des changements de températures

Toutes ces données font que le dispositif de plateau tournant selon l'invention s'avère présenter des performances remarquables quant à la verticalité de l'axe de rotation et à la précision de l'orientation du plateau tournant.

Selon un mode de réalisation avantageux les actionneurs micrométriques sont constitués de vis différentielles à double sensibilité. De tels actionneurs permettent, en effet, d'effectuer dans un premier temps un réglage grossier de la verticalité de l'axe de rotation, puis d'affiner de façon très précise ce réglage dans un second temps. Moyennant un choix adéquat des pas de filetage, décrit en détail plus loin, une telle conception permet de faire coïncider l'axe de rotation avec la verticale à ± 2" d'arc.

De plus, de façon avantageuse selon l'invention, chaque actionneur comprend une vis différentielle comportant deux parties filetées, supérieure et inférieure, présentant des pas différents et séparées par une zone comportant un organe de manoeuvre de ladite vis différentielle, un écrou supérieur bloqué en rotation coopérant avec la partie filetée supérieure, et un écrou inférieur de réglage en hauteur coopérant avec la partie filetée inférieure.

En outre, chaque actionneur est avantageusement associé à des moyens de butée aptes à bloquer en rotation soit l'organe de manoeuvre de la vis différentielle, soit l'écrou inférieur de réglage en hauteur. De tels moyens de butée ont pour but de permettre de bloquer l'écrou inférieur lorsqu'on actionne l'organe de manoeuvre de la vis différentielle, et de même, de bloquer l'organe de manoeuvre lorsque l'écrou inférieur est actionné.

De plus, de façon avantageuse, les moyens de butée comprennent, pour chaque actionneur :
- une tige verticale juxtaposée audit actionneur et comportant deux tronçons de diamètres différents séparés par un épaulement, le tronçon supérieur présentant un diamètre inférieur à celui du tronçon inférieur,
- deux organes de butée amovibles percés d'un alésage longitudinal de diamètre respectivement conjugué de celui du tronçon supérieur et de celui du tronçon inférieur de la tige, adapté pour que l'un desdits organes de butée vienne se positionner en regard de l'écrou inférieur et bloque ce dernier en rotation, et que l'autre organe de butée repose sur l'épaulement, en regard de l'organe de manoeuvre de la vis différentielle et bloque ce dernier en rotation.

Selon un autre mode de réalisation avantageux, l'écrou supérieur de chaque actionneur présente une face supérieure sphérique, ledit écrou supérieur étant surmonté d'une pièce de liaison avec le plateau intermédiaire, solidarisée en rotation avec cet écrou supérieur, et dotée d'une face inférieure sphérique de même rayon que celui de la face supérieure de l'écrou supérieur, et de moyens mécaniques de liaison avec le plateau intermédiaire aptes à bloquer en rotation ladite pièce de liaison. Une telle portée sphérique conduit à permettre de se soustraire aux défauts de planéité du sol et à obtenir un appui correct en toute circonstance.

De plus, de façon avantageuse, les moyens mécaniques de liaison de chaque pièce de liaison et du plateau intermédiaire comprennent un tenon ménagé sur ladite pièce de liaison et adapté pour venir s'insérer dans une rainure ménagée en sous-face du plateau intermédiaire.

Selon un autre mode de réalisation avantageux, le dispositif selon l'invention comprend au moins six actionneurs : au moins trois actionneurs de réglage de la hauteur du plateau intermédiaire, repartis sur la circonférence d'une courbe circulaire, et au moins trois actionneurs destinés à venir au contact de la face inférieure du plateau intermédiaire, une fois le réglage en hauteur effectué, et répartis sur la circonférence d'une courbe circulaire de diamètre différent de celui de la première courbe circulaire.

Ainsi, au moins trois actionneurs servent au réglage de la position en hauteur du plateau intermédiaire, tandis qu'au moins trois autres actionneurs servent simplement de contact et conduisent à augmenter le polygone de sustentation.

Selon un autre aspect avantageux de l'invention, le dispositif de plateau tournant comprend une embase constituée d'une plaque sur laquelle sont solidarisés des plots de positionnement des actionneurs. Cette embase a pour première fonction de conduire à répartir la charge du dispositif sur le sol. De plus, elle est équipée de plots qui permettent d'implanter les actionneurs de façon à les positionner en regard des points d'appui implantés dans le plateau intermédiaire. Enfin, l'épaisseur des plots permet de définir l'altitude du plateau tournant du dispositif.

De plus, chaque plot comporte avantageusement un godet dans lequel s'étend l'extrémité inférieure de la vis différentielle, et sur la périphérie duquel repose l'écrou inférieur par l'intermédiaire d'un organe de roulement, destiné à réduire les frottements.

Par ailleurs, l'embase est avantageusement percée d'un orifice central qui permet de positionner au sol, avec une précision de l'ordre du millimètre, l'axe de rotation du dispositif par rapport à un point précis dans l'espace, moyennant le traçage sur le sol d'un cercle de diamètre correspondant.

Par ailleurs, les moyens d'entraînement en rotation du réducteur comprennent avantageusement un moteur pas à pas associé à un réducteur accouplé à la vis sans fin du réducteur à roue dentée. Ce moto-réducteur associé au réducteur à vis sans fin permet d'obtenir une précision angulaire optimale quant au positionnement angulaire du plateau tournant.

De plus, de façon avantageuse, selon l'invention, le dispositif comprend un codeur angulaire intégré dans le réducteur à vis sans fin. Un tel codeur annulaire de résolution similaire à celle du réducteur permet de programmer la rotation depuis une commande installée sur un pupitre distant et isolé du dispositif de plateau tournant.

Par ailleurs, le plateau intermédiaire est avantageusement percé d'un alésage central pour le passage éventuel de câbles.

En outre, de façon avantageuse, le plateau supérieur présente un alésage axial ménagé de façon à permettre de supporter un dispositif de centrage doté d'une pinnule axiale.

Ce plateau supérieur est donc conçu pour permettre le montage d'un centreur apte à recevoir une pinnule (sphère polie munie d'une tige calibrée) qui matérialise un point situé sur l'axe de rotation du dispositif. Ainsi, la visée de cette pinnule en autocollimation par un théodolite permet de déterminer la position de l'axe de rotation.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins :

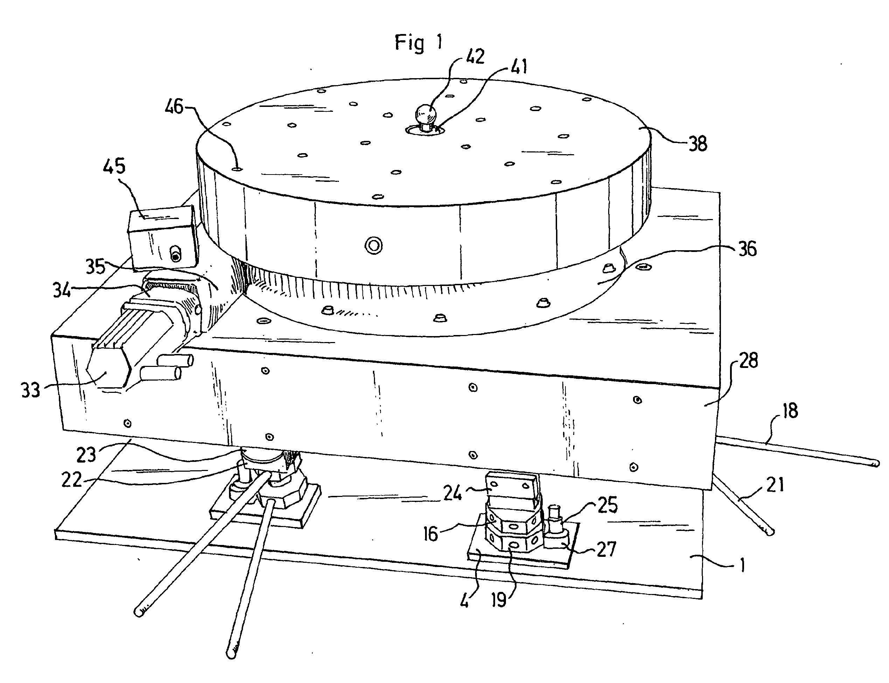

- la figure 1 est une vue en perspective d'un dispositif de plateau tournant conforme à l'invention,
- la figure 2 en est une coupe axiale par un plan vertical,
- la figure 3 est une coupe axiale verticale, à échelle agrandie d'un des actionneurs de ce dispositif,
- la figure 4 est une vue de dessus de l'embase de ce dispositif,
- et la figure 5 est une vue de dessus partielle, à échelle agrandie, du plateau supérieur de ce dispositif.

Le dispositif de plateau tournant représenté aux figures est conçu pour supporter une charge pouvant atteindre deux tonnes, et pour permettre de positionner angulairement cette charge avec une précision de ± 1" d'arc.

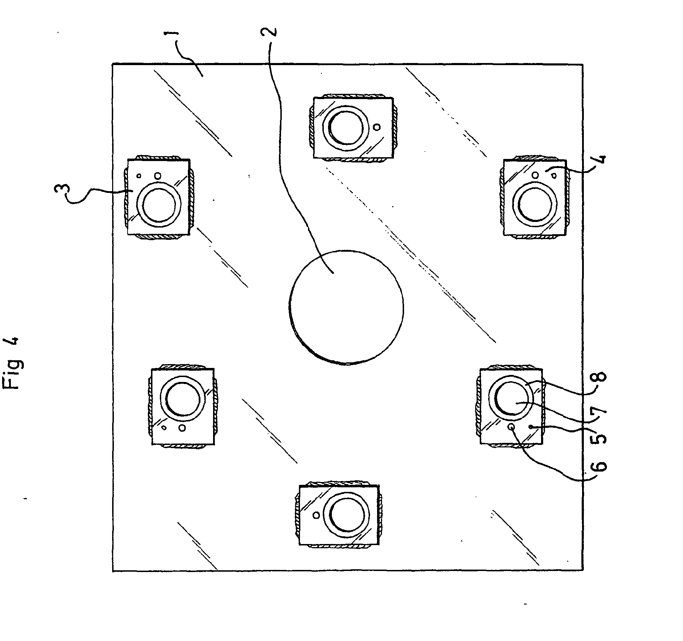

Ce dispositif comprend, en premier lieu, une embase 1 représentée à la figure 4, constituée d'une plaque en alliage léger de dimensions 1 350 mm x 1 200 mm x 10 mm, percée d'une ouverture circulaire de 300 mm de diamètre dont le centre coïncide avec l'axe de rotation du dispositif.

Cette ouverture centrale 2 a pour but de permettre de positionner au sol, avec une précision de l'ordre du millimètre, l'axe de rotation du dispositif par rapport à un point précis dans l'espace, moyennant un marquage préliminaire sur le sol.

L'embase comporte, en outre, six plots 3, 4 en alliage léger soudés sur celle-ci, destinés au positionnement des actionneurs décrits plus loin, et percés à cet effet d'un alésage vertical 7. Trois de ces plots 3 sont disposés de façon que leurs alésages 7 soient situés aux sommets d'un triangle équilatéral inscrit dans un cercle de diamètre 1100 mm centré sur l'axe de rotation. Les trois autres plots 4 sont disposés de façon que leurs alésages 7 soient situés aux sommets d'un triangle équilatéral inscrit dans un cercle de diamètre 960 mm. De plus, les deux triangles sont déphasés de 180° .

L'épaisseur de ces plots 3, 4 permet, en outre, de définir l'altitude du plateau tournant du dispositif.

En vue de la manutention de l'embase 1, quatre de ces plots 3, 4 sont percés de trous taraudés tel que 5 munis d'hélicoïls destinés à recevoir des anneaux de levage.

De plus, chacun de ces plots 3, 4 est également percé d'un second orifice 6 destiné à recevoir une tige décrite plus loin.

Enfin, chaque alésage 7 présente un lamage 8 au niveau de son extrémité supérieure, à l'intérieur duquel est logé un godet 9, fixé au plot 3, 4 au moyen de vis telles que 10.

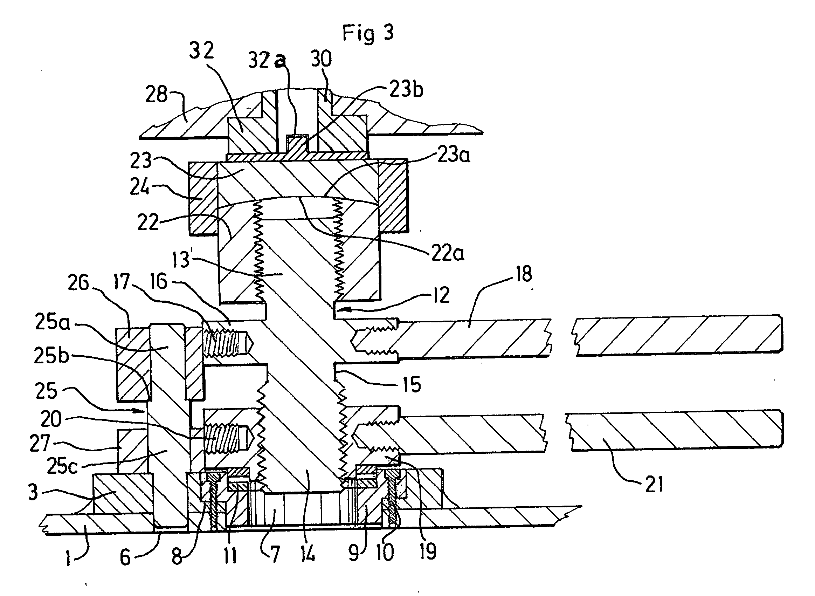

Tel que représenté en détail à, la figure 3, chacun des godets 9 présente une partie supérieure annulaire de section en forme de L adapté pour se loger dans un lamage 8 et pour former une portée annulaire d'appui d'une butée à aiguilles 11, et une aile inférieure verticale cylindrique s'étendant dans l'alésage 7.

Tel que précité, les plots 3, 4 permettent notamment le positionnement de six actionneurs décrits en détail ci-après en référence à la figure 3, destinés à permettre de régler en altitude de quelques millimètres la hauteur du plateau tournant, de régler la verticalité de l'axe de rotation, et à soutenir le dispositif et empêcher son basculement en cas de déport important du centre de gravité de la charge.

A cet effet, chaque actionneur comprend, en premier lieu, une vis différentielle 12 comportant une partie supérieure 13 filetée au pas trapézoïdal métrique Tr 50 x 8, de 45 mm de long, et une partie inférieure 14 filetée au pas trapézoïdal anglais Tr 50 x 3 filets/pouce, de 61 mm de long.

De plus, entre ces parties filetées 13, 14 et séparé de chacune d'elle par une gorge 15, chaque vis différentielle 12 comporte un organe de manoeuvre 16 de forme octogonale dans chacune des faces verticales duquel est percé un orifice borgne taraudé 17 permettant l'implantation d'une barre 18 facilitant la rotation et augmentant la précision.

Chaque actionneur comporte, en outre, un écrou octogonal 19 de réglage en hauteur, au pas Tr 50 x 3 filets par pouce, reposant sur la butée à aiguilles 11 afin de réduire les frottements. Cet écrou octogonal 19 est également percé d'orifices radiaux taraudés 20 permettant de le manoeuvrer au moyen d'une tige 21.

Chaque actionneur comporte également un écrou supérieur 22 constitué d'un écrou carré au pas Tr 50 x 8, dont la face supérieure 22a est sphérique.

En vue de l'interface avec le plateau intermédiaire, chaque actionneur comporte, en outre une coupelle 23 constitué d'une pièce de section carrée identique à celle de l'écrou supérieur 22. Cette coupelle 23 comporte une face inférieure 23a de forme sphérique adaptée pour reposer sur l'écrou supérieur 22, de façon à obtenir un appui sphérique qui permet de se soustraire aux défauts de planéité du sol et d'obtenir un appui correct en toute circonstance.

En vue de la liaison mécanique avec le plateau intermédiaire, chaque coupelle 23 comporte enfin un tenon 23b en saillie sur sa face supérieure.

Enfin, deux plaquettes métalliques telles que 24 sont fixées sur deux faces latérales opposées de la coupelle 23 en vue d'empêcher la rotation de l'écrou supérieur 19 lorsque la vis différentielle 12 ou l'écrou inférieur 19 sont actionnés.

En dernier lieu, le principe de fonctionnement de chaque actionneur imposant de bloquer la vis différentielle 12 lorsque l'écrou inférieur 19 est actionné, et inversement de bloquer l'écrou inférieur 19 lorsque la vis 12 est actionnée, ces actionneurs comprennent des moyens de butée de blocage en rotation de l'un ou l'autre de ces deux éléments 12, 19.

Ces moyens de butée comprennent, en premier lieu, une tige 25 enfichée dans l'orifice 6 des plots 3, 4, et présentant deux tronçons longitudinaux 25a, 25c de diamètres différents séparés par un épaulement 25b, le tronçon inférieur 25c présentant un diamètre supérieur à celui du tronçon supérieur 25a.

Ces moyens de butée comportent, en outre, deux organes de butée amovibles 26, 27 percés d'un alésage longitudinal de diamètre respectivement conjugué de celui du tronçon supérieur 25a et de celui du tronçon inférieur 25c de la tige 25, adapté pour que l'un desdits organes de butée 27 vienne se positionner en regard de l'écrou inférieur 19 et bloque ce dernier en rotation, et que l'autre organe de butée 26 repose sur l'épaulement 25b, en regard de l'organe de manoeuvre 16 de la vis différentielle 12 et bloque ce dernier en rotation.

Selon l'invention, seulement trois des actionneurs ci-dessus décrits, situés sur le cercle de diamètre 960 mm, sont utilisés pour effectuer les réglages. Les trois autres, situés sur le cercle de diamètre 1 100 mm, sont quant à eux destinés à être amenés au contact du plateau intermédiaire de façon à augmenter le polygone de sustentation.

De plus, la finesse de réglage que permet d'atteindre de tels actionneurs autorise de faire coïncider l'axe de rotation avec la verticale à ± 2" d'arc.

Le plateau intermédiaire 28 que supporte ces actionneurs et qui sert de bâti au dispositif est, quant à lui, constitué d'une table en granit noir de qualité métrologique de forme parallélépipédique de dimensions 1 300 mm x 1 100 mm x 220 mm, percée d'un orifice central circulaire 29 pour le passage éventuel de câbles.

A l'intérieur de cette table 28, sont implantés six inserts traversant tels que 30 disposés de façon à s'étendre chacun dans le prolongement d'un des actionneurs. Chacun de ces inserts 30 comporte en premier lieu une extrémité supérieure taraudée 31 pour l'implantation d'anneaux de levage. Ils comportent, en outre, au niveau de leur extrémité inférieure, un épaulement 32 destiné à reposer sur la coupelle 23 des actionneurs, et comportant une rainure 32a apte à loger le tenon 23b de cette coupelle 23, et donc à bloquer en rotation cette dernière et par conséquent l'écrou supérieur 22 de l'actionneur.

Cette table de granit 28 sert également de support au système de transmission et possède donc également des inserts (non représentés) de fixation de ce système de transmission.

Ce système de transmission comprend un moteur pas à pas 33 associé à un réducteur 34 de rapport 1/50 lui-même accouplé à un autre réducteur à roue 36 et vis sans fin 35, sans jeu angulaire, et de rapport 1/120, du type commercialisé par la société CMD.

En outre, un codeur angulaire de résolution une seconde d'arc (non représenté) est monté solidaire de l'axe de sortie du second réducteur 35, 36, et permet de programmer la rotation depuis une commande déportée. En vue que le signal ne soit pas altéré par les pertes en ligne, un amplificateur 45 est par ailleurs installé à la sortie du codeur.

Les informations de ce codeur angulaire peuvent ainsi être transmises à un pupitre de commande (non représenté) comportant essentiellement une commande numérique classique de machine-outil, permettant de faire fonctionner le dispositif tournant selon trois modes :
- manuel avec une manivelle électronique actionnée manuellement,
- semi-automatique : une valeur angulaire est affichée sur un écran et le plateau supérieur 38 vient se positionner dans la direction choisie,
- programmé : un cycle de positionnements est commandé par un ordinateur.

Ce système de transmission, et plus spécifiquement le second réducteur 35, 36, sert, en outre, de support 37 pour le plateau supérieur tournant 38 du dispositif selon l'invention.

Ce plateau tournant 38 est constitué d'un disque en granit noir de qualité métrologique de dimensions Ø 980 mm x 160 mm, formant l'interface avec la charge et doté notamment d'inserts pour la fixation de cette charge et d'inserts pour sa fixation sur le second réducteur 35, 36.

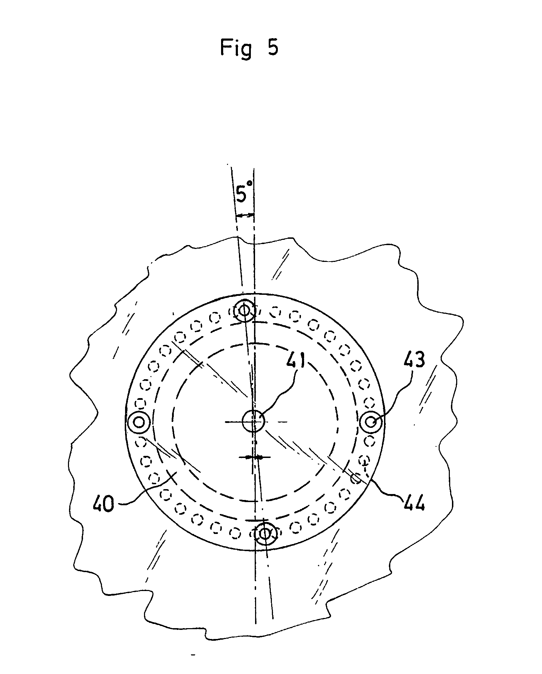

Ce plateau tournant 38 comporte également un insert central 39 logé dans un alésage traversant, et présentant une hauteur sensiblement inférieure à celle du plateau de façon à former un épaulement permettant de disposer et de fixer sur cet insert un dispositif de centrage 40. La face supérieure de cet insert 39 formant épaulement, est percée de 36 trous taraudés 44 (un trou tous les 10°) représentés en pointillés sur la figure 5.

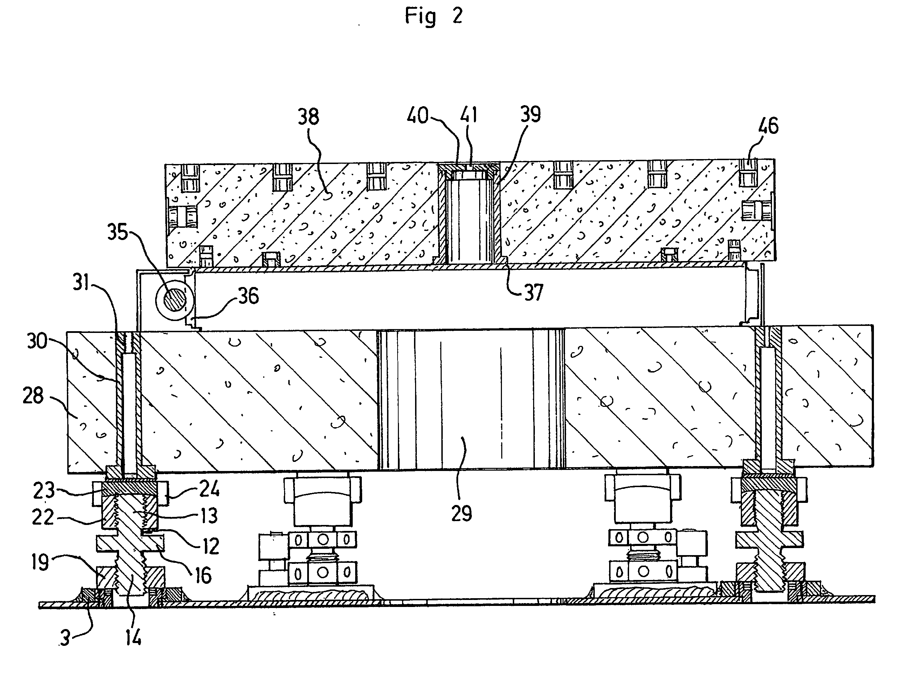

Tel que représenté à la figure 2, le dispositif de centrage 40 se présente sous la forme générale d'un disque de diamètre adapté pour reposer sur l'insert 39, percé d'un orifice central 41 adapté pour loger la tige calibrée d'une pinnule 42 comportant une sphère polie dans le prolongement de ladite tige.

Tel que représenté sur la figure 5, ce disque de centrage, ou centreur 40 est en outre percé de quatre orifices lisses tels que 43 dont deux décalés de 5° par rapport à la perpendiculaire.

L'utilisation de ce centreur 40 est destinée à matérialiser l'axe de rotation du dispositif tournant avec l'axe de l'insert central 39, c'est-à-dire de faire coïncider l'axe de cet insert 39 avec l'axe de rotation vertical. Cette disposition permet, en effet, d'avoir un excellent point de centrage pour interfacer les spécimens à installer sur le dispositif tournant.

Cette utilisation procède des constatations et des démarches explicitées ci-dessous.

En théorie, l'axe de l'insert central 39 est censé être confondu avec l'axe de rotation du plateau supérieur 38. Toutefois, les défauts de fabrication de ce plateau 38 et les défauts de positionnement de ce dernier sur le réducteur 35, 36 font que l'insert central 39 présente un voile et un faux-rond.

En vue de s'affranchir de ces défauts résultant en majeure partie du faux-rond de l'insert central 39 du plateau supérieur 38, la solution consiste dans un premier temps à mesurer ce faux-rond au moyen d'un comparateur en vue de localiser la phase de ce faux-rond sur ledit plateau supérieur.

le centreur 40 est alors réalisé de façon que l'orifice 41 soit excentré par rapport à l'axe de l'insert central 39 de la valeur mesurée à l'aide du comparateur. Enfin, ce centreur 40 est monté sur le plateau supérieur 38 avec une orientation convenable autorisée par les orifices 43 de ce centreur 40 et les trous taraudés 44 de l'insert central 39 qui autorisent soixante douze positions différentes avec un pas de 5° .

Lors de cet ajustement, la pinnule 42, introduite dans l'orifice central 41 du centreur 40, permet de vérifier le centrage et de parfaire ce dernier, par visée de cette dernière au moyen d'un théodolite, en faisant tourner le plateau supérieur 38 de 360° .

Dans la pratique, l'utilisation de ce centreur 40 selon la méthodologie ci-dessus décrite conduit à permettre de faire coïncider l'axe de l'insert central 39 avec l'axe de rotation du dispositif tournant à quelques microns près, autorisant un centrage optimal de la charge supportée par ledit plateau supérieur.

En dernier lieu, le plateau supérieur 38 comporte quatre inserts de positionnement tels que 46 insérés dans sa face supérieure et implantés tous les 90° sur un cercle de diamètre 900 mm.

Ces quatre inserts 46 sont destinés à permettre de déterminer avec l'insert central 39 six systèmes d'axes et de déterminer lequel de ces axes sera choisi comme axe de référence du dispositif, c'est-à-dire l'axe dont l'écart par rapport à l'axe de rotation est le plus faible :
- quatre axes passant par l'insert central 39 et un insert périphérique 46,
- deux axes passant par deux inserts périphériques opposés 46.

A cet effet, une première série de relevés réalisée au moyen d'un théodolite, est réalisée de façon à définir la direction où centre d'une pinnule 42 introduite dans le centreur 40, axe de rotation, et centre d'une pinnule 42 introduite dans l'un des inserts périphériques 46 présente le meilleur alignement.

Une seconde série de relevés est également réalisée au moyen d'un théodolite, en disposant deux pinnules 42 dans deux inserts périphériques 46 opposés.

La comparaison des résultats des six relevés effectués permet alors de choisir le meilleur axe, et ainsi de décréter quel est l'axe de référence du dispositif tournant, de repérer ce dernier, et de déterminer son écart par rapport à l'axe de rotation.

Les performances pouvant être atteintes avec le dispositif de plateau tournant ci-dessus décrit s'avèrent remarquables car le plateau tournant 38 peut être positionné avec une précision de ± 1" d'arc, et les actionneurs permettent de faire coïncider l'axe de rotation avec la verticale à ± 2" d'arc.

Le granit noir de qualité métrologique utilisé pour la réalisation des plateaux 28 et 38 peut quant à lui être du granit noir d'Afrique ou du granit noir absolu dont les caractéristiques sont les suivantes :

| | Densité | Porosité | Coeff. Elasticité | Résistance Compression | Résistance Flexion | Coeff. Dilatation Linéaire | Dureté MOHS |
|---|---|---|---|---|---|---|---|
| NOIR D'Afrique | 2,85kg/dm3 | 0,09 % | 60 Gpa | 244 Mpa | 26 MPa | 6,5x10⁻⁶ | 7 |
| NOIR ABSOLU | 3,0 kg/dm³ | 0,11 % | 80 Gpa | 270 Mpa | 25 MPa | 5,9x10⁻⁶ | 7 |

## Revendications

1. Dispositif de plateau tournant motorisé destiné à supporter et orienter une charge, telle que notamment un appareil de mesure optique en vue de son étalonnage, **caractérisé en ce qu'**il comprend :
- un plateau intermédiaire plein (28) en un matériau rigide d'une densité supérieure à 2 kg/dm³, fixe en rotation par rapport au sol et reposant sur le sol par l'intermédiaire d'au moins trois actionneurs verticaux micrométriques (12-27) répartis sous ledit plateau,
- un réducteur (35, 36) sans jeu angulaire à vis sans fin et roue dentée surmontée d'une platine tournante (37), disposé sur le plateau intermédiaire (28),
- des moyens (33, 34), d'entraînement en rotation de la roue dentée (36) du réducteur (35, 36),
- et un plateau supérieur rotatif plein (38) en un matériau rigide d'une densité supérieure à 2 kg/dm³ porté par la platine tournante (37) du moto-réducteur (35, 36).

2. Dispositif de plateau tournant selon la revendication 1, **caractérisé en ce que** les actionneurs micrométriques (12-27) comportent des vis différentielles (12) à double sensibilité.

3. Dispositif de plateau tournant selon la revendication 2, **caractérisé en ce que** chaque actionneur (12-27) comprend une vis différentielle (12) comportant deux parties filetées (13, 14), supérieure et inférieure, présentant des pas différents et séparées par une zone comportant un organe (16) de manoeuvre de ladite vis différentielle, un écrou supérieur (22) bloqué en rotation coopérant avec la partie filetée supérieure (13), et un écrou inférieur (19) de réglage en hauteur coopérant avec la partie filetée inférieure (14).

4. Dispositif de plateau tournant selon la revendication 3, **caractérisé en ce qu**'il comprend des moyens de butée (25-27) aptes à bloquer en rotation soit l'organe de manoeuvre (16) de la vis différentielle (12), soit l'écrou inférieur (19) de réglage en hauteur.

5. Dispositif de plateau tournant selon la revendication 4,
**caractérisé en ce que** les moyens de butée comprennent, pour chaque actionneur :
- une tige verticale (25) juxtaposée audit actionneur et comportant deux tronçons (25a, 25c) de diamètres différents séparés par un épaulement (25b), le tronçon supérieur (25a) présentant un diamètre inférieur à celui du tronçon inférieur (25c),
- deux organes de butée (26, 27) amovibles percés d'un alésage longitudinal de diamètre respectivement conjugué de celui du tronçon supérieur (25a) et de celui du tronçon inférieur (25c) de la tige (25), adapté pour que l'un desdits organes de butée (27) vienne se positionner en regard de l'écrou inférieur (19) et bloque ce dernier en rotation, et que l'autre organe de butée (26) repose sur l'épaulement (25b), en regard de l'organe de manoeuvre (16) de la vis différentielle (12) et bloque ce dernier en rotation.

6. Dispositif de plateau tournant selon l'une des revendications 3 à 5, **caractérisé en ce que** l'écrou supérieur (22) de chaque actionneur présente une face supérieure sphérique (22a), ledit écrou supérieur étant surmonté d'une pièce de liaison (23) avec le plateau intermédiaire (28), solidarisée en rotation avec cet écrou supérieur, et dotée d'une face inférieure sphérique (23a) de même rayon que celui de la face supérieure (22a) de l'écrou supérieur (22), et de moyens mécaniques (23b) de liaison avec le plateau intermédiaire aptes à bloquer en rotation ladite pièce de liaison.

7. Dispositif de plateau tournant selon la revendication 6, **caractérisé en ce que** les moyens mécaniques de liaison de chaque pièce de liaison (23) et du plateau intermédiaire (28) comprennent un tenon (23b) ménagé sur ladite pièce de liaison et adapté pour venir s'insérer dans une rainure (32a) ménagée en sous-face du plateau intermédiaire (28).

8. Dispositif de plateau tournant selon l'une des revendications précédentes, **caractérisé en ce qu**'il comprend au moins six actionneurs (12-27) : au moins trois actionneurs de réglage de la hauteur du plateau intermédiaire (28), repartis sur la circonférence d'une courbe circulaire, et au moins trois actionneurs destinés à venir au contact de la face inférieure du plateau intermédiaire (28), une fois le réglage en hauteur effectué, et répartis sur la circonférence d'une courbe circulaire de diamètre différent de celui de la première courbe circulaire.

9. Dispositif de plateau tournant selon l'une des revendications précédentes, **caractérisé en ce qu**'il comprend une embase (1) constituée d'une plaque sur laquelle sont solidarisés des plots (3, 4) de positionnement des actionneurs (12-27).

10. Dispositif de plateau tournant selon la revendication 9, **caractérisé en ce que** chaque plot (3, 4) comporte un godet (9) dans lequel s'étend l'extrémité inférieure de la vis différentielle (12), et sur la périphérie duquel repose l'écrou inférieur (19) par l'intermédiaire d'un organe de roulement (11).

11. Dispositif de plateau tournant selon l'une des revendications 9 ou 10, **caractérisé en ce que** l'embase (1) est percée d'un orifice central (2).

12. Dispositif de plateau tournant selon l'une des revendications précédentes, **caractérisé en ce que** les moyens d'entraînement en rotation de la roue dentée (36) du réducteur (35, 36) comportent un moteur pas à pas (33) associé à un réducteur (34) accouplé à la vis sans fin (35) dudit réducteur (35, 36).

13. Dispositif de plateau tournant selon la revendication 12, **caractérisé en ce qu**'il comprend un codeur angulaire intégré dans le réducteur (35, 36) à vis sans fin.

14. Dispositif de plateau tournant selon l'une des revendications précédentes, **caractérisé en ce que** le plateau intermédiaire (28) est percé d'un alésage central (29).

15. Dispositif de plateau tournant selon l'une des revendications précédentes, **caractérisé en ce que** le plateau supérieur (38) présente un alésage axial (39) ménagé de façon à permettre de supporter un dispositif de centrage (40) doté d'une pinnule axiale (42).

16. Dispositif de plateau tournant selon l'une des revendications précédentes, **caractérisé en ce que** les plateaux intermédiaire (28) et supérieur (38) sont réalisés en granit noir de qualité métrologique.

## Claims

1. A motorised rotary table device intended to support and orient a load, such as in particular an optical measuring apparatus with a view to calibration thereof, **characterised in that** it comprises:
- a solid intermediate table (28) of a rigid material with a density greater than 2 kg/dm³, fixed rotationally relative to the floor and resting on the floor via at least three vertical micrometric actuators (12-27) distributed under said table,
- a reduction gear (35, 36) without angular play but with an endless screw and a toothed wheel surmounted by a rotary plate (37), disposed on the intermediate table (28),
- means (33, 34) for rotationally driving the toothed wheel (36) of the reduction gear (35, 36),
- and a solid upper rotary table (38) of a rigid material of a density greater than 2 kg/dm³, borne by the rotary plate (37) of the motorised reduction gear (35, 36).

2. A rotary table device according to claim 1, **characterised in that** the micrometric actuators (12-27) comprise dual sensitivity differential screws (12).

3. A rotary table device according to claim 2, **characterised in that** each actuator (12-27) comprises a differential screw (12) comprising two threaded parts (13, 14), one upper and one lower, having different pitches and being separated by a zone comprising a member (16) for operating said differential screw, a rotationally blocked upper nut (22) cooperating with the upper threaded part (13) and a lower, height-adjusting nut (19) cooperating with the lower threaded part (14).

4. A rotary table device according to claim 3, **characterised in that** it comprises abutment means (25-27) capable of rotationally blocking either the member (16) for operating the differential screw (12) or the lower, height-adjusting nut (19).

5. A rotary table device according to claim 4, **characterised in that** the abutment means comprise, for each actuator:
- a vertical rod (25) juxtaposed with said actuator and comprising two portions (25a, 25c) of different diameters separated by a shoulder (25b), the upper portion (25a) having a smaller diameter than that of the lower portion (25c),
- two removable abutment members (26, 27) pierced with a longitudinal bore of a diameter respectively coordinated with that of the upper portion (25a) and that of the lower portion (25c) of the rod (25), adapted so that one of said abutment members (27) comes into a position opposite the lower nut (19) and blocks rotation of the latter and the other abutment member (26) rests on the shoulder (25b) opposite the member (16) for operating the differential screw (12) and blocks rotation of the latter.

6. A rotary table device according to one of claims 3 to 5, **characterised in that** the upper nut (22) of each actuator has a spherical upper face (22a), said upper nut being surmounted by a connecting piece (23) connecting it to the intermediate table (28), which connecting piece (23) is connected for rotation with said upper nut and provided with a spherical lower face (23a) of the same radius as that of the upper face (22a) of the upper nut (22) and with mechanical connection means (23b) connecting it to the intermediate table and capable of blocking rotation of said connecting piece.

7. A rotary table device according to claim 6, **characterised in that** the mechanical connection means for connecting each connecting piece (23) and the intermediate table (28) comprise a peg (23b) formed on said connecting piece and adapted for insertion into a groove (32a) formed in the underside of the intermediate table (28).

8. A rotary table device according to one of the preceding claims, **characterised in that** it comprises at least six actuators (12-27): at least three actuators for adjusting the height of the intermediate table (28), distributed over the circumference of a circular curve, and at least three actuators intended to come into contact with the lower face of the intermediate table (28), once height adjustment has been effected, and distributed over the circumference of a circular curve of a different diameter from that of the first circular curve.

9. A rotary table device according to one of the preceding claims, **characterised in that** it comprises a base (1) consisting of a plate to which studs (3, 4) are firmly connected for positioning the actuators (12-27).

10. A rotary table device according to claim 9, **characterised in that** each stud (3, 4) comprises a cup (9) into which extends the lower end of the differential screw (12) and on the periphery of which the lower nut (19) rests via a rolling member (11).

11. A rotary table device according to one of claims 9 or 10, **characterised in that** the base (1) is pierced with a central orifice (2).

12. A rotary table device according to one of the preceding claims, **characterised in that** the drive means for rotational drive of the toothed wheel (36) of the reduction gear (35, 36) comprise a stepping motor (33) associated with a reduction gear (34) coupled to the endless screw (35) of said reduction gear (35, 36).

13. A rotary table device according to claim 12, **characterised in that** it comprises an angle encoder incorporated into the endless screw reduction gear (35, 36).

14. A rotary table device according to one of the preceding claims, **characterised in that** the intermediate table (28) is pierced with a central bore (29).

15. A rotary table device according to one of the preceding claims, **characterised in that** the upper table (38) has an axial bore (39) formed so as to allow support of a centring device (40) provided with an axial sighting device (42).

16. A rotary table device according to one of the preceding claims, **characterised in that** the intermediate and upper tables (28 and 38 respectively) are made of metrological grade black granite.

## Patentansprüche

1. Vorrichtung mit drehbarer Plattform mit Motorantrieb zum Tragen und zur Ausrichtung einer Last, wie zum Beispiel insbesondere ein optisches Meßgerät zur Eichung, **dadurch gekennzeichnet, daß** sie folgende Teile umfaßt:
- Eine massive Zwischenplattform (28) aus einem starren Material mit über 2 kg/dm³ Dichte, die in Drehung dem Boden gegenüber feststeht und vermittels von mindestens drei unter der besagten Plattform verteilten vertikalen mikrometrischen Wirkgliedern (12 - 27) auf dem Boden ruht;
- Ein auf der Zwischenplattform (28) angeordnetes Untersetzungsgetriebe (35, 36) ohne Winkelspiel mit Schnecke und Zahnrad mit einer aufgesetzten drehbaren Platine (37);
- Antriebsmittel (33, 34) zur Drehung des Zahnrads (36) des Untersetzungsgetriebes (35, 36);
- Eine massive obere Drehplattform (38) aus einem starren Material mit über 2 kg/dm³ Dichte, die von der drehbaren Platine (37) des Untersetzungsgetriebes (35, 36) getragen wird.

2. Vorrichtung mit drehbarer Plattform nach Anspruch 1, **dadurch gekennzeichnet, daß** die mikrometrischen Wirkglieder (12 - 27) doppelt sensible Differentialschrauben (12) umfassen.

3. Vorrichtung mit drehbarer Plattform nach Anspruch 2, **dadurch gekennzeichnet, daß** jedes Wirkglied (12 - 27) eine Differentialschraube (12) mit zwei Gewindeteilen (13, 14), einem oberen und einem unteren, umfaßt, die unterschiedliche Gewindegänge aufweisen und von einer Zone getrennt sind, die ein Betätigungsorgan (16) der besagten Differentialschraube, eine obere in Drehung gesperrte und mit dem oberen Gewindeteil (13) zusammenwirkende Schraubenmutter (22), umfaßt und eine untere Schraubenmutter (19) zur Höhenverstellung, die mit dem unteren Gewindeteil (14) zusammenwirkt.

4. Vorrichtung mit drehbarer Plattform nach Anspruch 3, **dadurch gekennzeichnet, daß** sie Anschlagmittel (25 - 27) umfaßt, die geeignet sind, entweder das Betätigungsorgan (16) der Differentialschraube (12), oder die untere Schraubenmutter (19) für die Höhenverstellung in Drehung zu sperren.

5. Vorrichtung mit drehbarer Plattform nach Anspruch 4, **dadurch gekennzeichnet, daß** die Anschlagmittel für jedes Wirkglied folgende Teile umfassen:
- Eine senkrechte Spindel (25) neben dem besagten Wirkglied, die zwei Abschnitte (25a, 25c) mit unterschiedlichem Durchmesser umfaßt, die durch eine Schulter (25b) getrennt sind, wobei der obere Abschnitt (25a) einen geringeren Durchmesser als der untere Abschnitt (25c) aufweist;
- Zwei abnehmbare Anschlagorgane (26, 27) mit einer Längsbohrung mit einem Durchmesser, der von demjenigen des oberen Abschnitts (25a) beziehungsweise demjenigen des unteren Abschnitts (25c) der Spindel (25) abgeleitet und so angepaßt ist, daß eines der besagten Anschlagorgane (27) sich vor der unteren Schraubenmutter (19) positioniert und letztere in Drehung sperrt, und daß das andere Anschlagorgan (26) auf der Schulter (25b) vor dem Betätigungsorgan (16) der Differentialschraube (12) ruht und letztere in Drehung sperrt.

6. Vorrichtung mit drehbarer Plattform nach einem beliebigen der vorstehenden Ansprüche 3 bis 5, **dadurch gekennzeichnet, daß** die obere Schraubenmutter (22) jedes Wirkglieds eine obere kugelförmige Seite (22a) aufweist, wobei sich über der besagten Schraubenmutter ein Verbindungsteil (23) mit der Zwischenplattform (28) befindet, das mit dieser oberen Schraubenmutter in Drehung fest verbunden und mit einer kugelförmigen Unterseite (23a) mit dem gleichen Durchmesser wie die Oberseite (22a) der oberen Schraubenmutter (22) versehen ist, und mechanische Mittel (23b) zur Verbindung mit der Zwischenplattform, die geeignet sind, das besagte Verbindungsteil in Drehung zu sperren.

7. Vorrichtung mit drehbarer Plattform nach Anspruch 6, **dadurch gekennzeichnet, daß** die mechanischen Mittel zur Verbindung jedes Verbindungsteils (23) mit der Zwischenplattform (28) einen Zapfen (23b) umfassen, der auf dem besagten Verbindungsteil gestaltet und geeignet ist, in eine Rille (32a) einzugreifen, die an der Unterseite der Zwischenplattform (28) gestaltet ist.

8. Vorrichtung mit drehbarer Plattform nach einem beliebigen der vorstehenden Ansprüche, **dadurch gekennzeichnet, daß** sie mindestens sechs Wirkglieder (12 - 27) umfaßt: mindestens drei Wirkglieder zur Höhenverstellung der Zwischenplattform (28), die auf dem Umfang einer kreisförmigen Kurve verteilt sind, und mindestens drei Wirkglieder, die in Kontakt mit der Unterseite der Zwischenplattform (28) kommen sollen, sobald die Höhenverstellung durchgeführt worden ist, und die auf dem Umfang einer kreisförmigen Kurve mit einem anderen Durchmesser als demjenigen der ersten kreisförmigen Kurve verteilt sind.

9. Vorrichtung mit drehbarer Plattform nach einem beliebigen der vorstehenden Ansprüche, **dadurch gekennzeichnet, daß** sie eine Basis (1) umfaßt, die aus einer Platte besteht, auf der Klötze (3, 4) zur Positionierung der Wirkglieder (12 - 27) fest verbunden sind.

10. Vorrichtung mit drehbarer Plattform nach Anspruch 9, **dadurch gekennzeichnet, daß** jeder Klotz (3, 4) ein Pfännchen (9) umfaßt, in dem sich das untere Ende der Differentialschraube (12) erstreckt, und auf dessen Umfang die untere Schraubenmutter (19) vermittels eines Lagerorgans (11) ruht.

11. Vorrichtung mit drehbarer Plattform nach einem beliebigen der vorstehenden Ansprüche 9 oder 10, **dadurch gekennzeichnet, daß** die Basis (1) mit einer zentralen Öffnung (2) durchbrochen ist.

12. Vorrichtung mit drehbarer Plattform nach einem beliebigen der vorstehenden Ansprüche, **dadurch gekennzeichnet, daß** die Mittel zum Drehantrieb des Zahnrads (36) des Untersetzungsgetriebes (35, 36) einen Schrittmotor (33) umfassen, der mit einem Untersetzungsgetriebe (34) verbunden ist, der mit der Schnecke (35) des besagten Untersetzungsgetriebes (35, 36) gekoppelt ist.

13. Vorrichtung mit drehbarer Plattform nach Anspruch 12, **dadurch gekennzeichnet, daß** sie einen in das Untersetzungsgetriebe (35, 36) mit Schnecke integrierten Winkelcodierer umfaßt.

14. Vorrichtung mit drehbarer Plattform nach einem beliebigen der vorstehenden Ansprüche, **dadurch gekennzeichnet, daß** die Zwischenplattform (28) mit einer zentralen Bohrung (29) durchbrochen ist.

15. Vorrichtung mit drehbarer Plattform nach einem beliebigen der vorstehenden Ansprüche, **dadurch gekennzeichnet, daß** die obere Plattform (38) eine axiale Bohrung (39) aufweist, die so gestaltet ist, daß sie eine mit einem axialen Diopter (42) versehene Zentriervorrichtung (40) tragen kann.

16. Vorrichtung mit drehbarer Plattform nach einem beliebigen der vorstehenden Ansprüche, **dadurch gekennzeichnet, daß** die Zwischenplattform (28) und die obere Plattform (38) aus schwarzem Granit metrologischer Qualität ausgeführt sind.
